# EUROPÄISCHE PATENTANMELDUNG

(11) **EP 2 648 339 A2**
(43) Veröffentlichungstag der Anmeldung: **09.10.2013**
(21) Anmeldenummer: 13162553.5
(22) Anmeldetag: 05.04.2013
(51) Int. Cl.: H04B 1/38

(54) **Vorrichtung zur Befestigung eines elektronischen Geräts**

(30) Priorität: 05.04.2012 DE 102012006900
(71) Anmelder: Stange, Mirko, 40213 Düsseldorf (DE)
(72) Erfinder: Stange, Mirko, 40213 Düsseldorf (DE); Wallbaum, Reiner, 40223 Düsseldorf (DE)
(74) Vertreter: Remus, Alvaro Johannes

(57) **Zusammenfassung**

Die Erfindung betrifft eine Vorrichtung 1 zur Befestigung eines elektronischen Geräts 40 an einem Kleidungsstück, welche eine Basisplatte 2, mindestens ein auf einer Seite der Basisplatte von dieser beabstandetes Halteelement 3, 4, 5 zum Halten des Geräts und mindestens ein auf der gegenüberliegenden Seite der Basisplatte angeordnetes Befestigungsmittel zur Befestigung an dem Kleidungsstück umfasst, wobei die Basisplatte 2 mindestens ein Stabilisierungsmittel aufweist. Die Erfindung umfasst auch die Verwendung der erfindungsgemäßen Vorrichtung 1 als Halterung für Tablet-PCs und Laptop-Computer. Mit Hilfe der erfindungsgemäßen Vorrichtung 1 ist es erstmals möglich, diese größeren elektronischen Geräte 40 an einem Kleidungsstück zu befestigen und direkt am Körper zu tragen.

## Beschreibung

Die Erfindung betrifft eine Vorrichtung zur Befestigung eines elektronischen Geräts an einem Kleidungsstück, insbesondere zur Verwendung als Halterung für Tablet-PCs und Laptop-Computer, welche eine Basisplatte, mindestens ein auf einer Seite der Basisplatte von dieser beabstandetes Halteelement zum Halten des Geräts und mindestens ein auf der gegenüberliegenden Seite der Basisplatte angeordnetes Befestigungsmittel zur Befestigung an dem Kleidungsstück umfasst.

Vorrichtungen zur Befestigung von elektronischen Geräten an Kleidungsstücken sind insbesondere aus dem Mobilfunkbereich bekannt. Dabei handelt es sich zumeist um Taschen oder Halterungen, die zur Aufnahme oder zum Halten von Mobiltelefonen geeignet sind und darüber hinaus relativ einfache Befestigungsmittel aufweisen, die beispielsweise an einem Gürtel, einer Hose oder aufgenähten Taschen eines Kleidungsstücks befestigt werden können.

Aus der DE 20 2006 011 198 U1 ist beispielsweise eine Vorrichtung zum Tragen eines Mobiltelefons mittels eines Gürtels bekannt, die mindestens eine Tasche zur Aufnahme des Mobiltelefons aufweist, welche mit dem Gürtel koppelbar ist. Zu diesem Zweck weist die Vorrichtung mindestens eine Halteschlaufe zur Kopplung der Tasche mit dem Gürtel und mindestens einen Haltegurt zur Festlegung der Tasche an einem Oberschenkel eines Benutzers auf.

Die DE 196 45 578 C2 beschreibt einen Mobiltelefon-Halter, der aus einer Halteplatte, an der ein Klipp für das Tragen am Gürtel angebracht ist, aus einer an der Mobiltelefon-Tasche befestigten Klemmstelle, die eine zur Führung eines Klemmrings installierte U-förmige Nut aufweist, aus einem Deckel, der mit einer Seite der Halteplatte zusammengefügt wird, und aus einer Schließvorrichtung, die zwischen der Halteplatte und dem Deckel für eine Ver- und Entriegelung des Klemmrings installiert ist, besteht.

Aus der DE 295 09 686 U1 ist eine Befestigungsvorrichtung für mobile Telekommunikationsgeräte bekannt, die eine mit dem Gerät verbundene Kopplungsplatte und eine Halterung zur Befestigung am Gürtel eines Benutzers aufweist. Die Kopplungsplatte ist mit der Rückseite des Geräts fest verbunden, wobei die Halterung eine Blattfeder ist, die mit der Kopplungsplatte lösbar verbunden werden kann, um das Gerät am Gürtel des Benutzers zu befestigen.

Aus dem Deutschen Gebrauchsmuster 94 20 170.6 ist ferner eine Halterung zur Befestigung von Mobilfunkgeräten an einem Gürtel oder sonstigen Kleidungsstück bekannt, die aus einem über ein Anpaßteil am Gerät befestigten Tragknopf und einem Rahmenteil besteht, welches bei der Benutzung des Geräts am Gürtel verbleibt. Das Rahmenteil ist mit einer federnden Befestigungsklammer versehen, die auf den Gürtel aufgesteckt werden kann, und weist ferner eine Arretierzunge auf, in welcher der Tragknopf befestigt werden kann.

Die bekannten Vorrichtungen haben aber alle den Nachteil, dass sie nur für kleine elektronische Geräte wie beispielsweise Mobiltelefone und Pager konstruiert, aber nicht für größere Geräte wie beispielsweise Tablet-PCs geeignet sind. Insbesondere weisen die bekannten Vorrichtungen ausschließlich einfache Befestigungsmittel auf, die zwar für kleinere Geräte ausreichend sind, aber für größere Geräte nicht die erforderliche Stabilität gewährleisten können.

Es ist daher Aufgabe der Erfindung, eine Vorrichtung der eingangs genannten Art zu schaffen, die eine sichere und stabile Befestigung größerer elektronischer Geräte an Kleidungsstücken ermöglicht.

Die Aufgabe wird erfindungsgemäß durch eine Vorrichtung der eingangs genannten Art gelöst, bei der die Basisplatte mindestens ein Stabilisierungsmittel aufweist. Es hat sich überraschender Weise herausgestellt, dass aufgrund der erforderlichen Größe, insbesondere der Breite, der erfindungsgemäßen Vorrichtung bei der vorgesehenen Verwendung durch die natürliche Wölbung des Körpers des Benutzers und der normalen Bewegungsabläufe an verschiedenen Stellen Brüche und Risse im Material entstehen, auch wenn ein ausreichend widerstandsfähiges Material eingesetzt wird. Dies gilt insbesondere deshalb, weil die erfindungsgemäße Vorrichtung leicht, dünn und kompakt, d. h. mit geringer Materialstärke, ausgebildet sein sollte, damit sie komfortabel und unauffällig getragen werden kann und nicht "aufträgt". Das einfache Konstruktionsprinzip, das bei Halterungen für kleinere Geräte, wie beispielsweise Mobiltelefone, Anwendung findet, lässt sich auf Halterungen für größere Geräte, wie beispielsweise Tablet-PCs, nicht ohne Weiteres übertragen. Durch das Stabilisierungsmittel wird die erfindungsgemäße Vorrichtung stabilisiert, so dass Belastungsbrüche und -risse vermieden werden. Mittels der erfindungsgemäßen Vorrichtung können somit selbst größere elektronische Geräte, die bisher in einer Tasche transportiert werden mussten, direkt am Körper des Benutzers getragen werden, so dass er beide Hände frei hat und sie beispielsweise problemlos auf einem Zweirad mitführen kann. Darüber hinaus kann die erfindungsgemäße Vorrichtung am Rücken des Benutzers getragen werden, was eine sehr komfortable Tragweise für das elektronische Gerät darstellt, wobei das Gerät zusammen mit der Vorrichtung sogar den Rücken stabilisiert. Darüber hinaus ist das Gerät bei dieser Tragweise von vorne und beim Tragen einer Jacke bzw. eines Anzugs und/oder eines Mantels auch von hinten nicht sichtbar, was in bestimmten Situationen für den Benutzer ebenfalls von Vorteil sein kann.

Vorzugsweise umfasst das Stabilisierungsmittel mindestens eine Vertiefung in der Basisplatte und/oder mindestens eine Verdickung der Basisplatte. Auf diese Weise kann die erfindungsgemäße Vorrichtung auf kostengünstige Weise effektiv verstärkt werden. Besonders bevorzugt sind zur Stabilisierung der Vorrichtung Sicken in dem Material vorgesehen, aus dem die Vorrichtung zumindest hauptsächlich besteht. Insbesondere kann die Basisplatte mit einem oder mehreren Stabilisierungsmittel(n), vorzugsweise Sicke(n), versehen sein. Aber auch andere Bereiche der erfindungsgemäßen Vorrichtung, wie beispielsweise die Übergänge bzw. Verbindungsstellen zwischen der Basisplatte und dem Halteelement und/oder Befestigungsmittel, können in vorteilhafter Weise mit einem oder mehreren Stabilisierungsmittel(n) versehen sein. Neben Vertiefungen bzw. Sicken und Verdickungen können in alternativer Ausgestaltung der Erfindung auch zusätzliche Elemente, wie beispielsweise in das Material eingelegte Verstärkungen (z.B. Draht. Metallbänder oder Ähnliches), als Stabilisierungsmittel eingesetzt werden. Darüber hinaus können verschiedene Materialen kombiniert werden, die beispielsweise im Mehrkomponenten-Spritzguss verarbeitet werden. In vorteilhafter Ausgestaltung der Erfindung sind mindestens zwei, drei, vier, fünf, sechs, sieben, acht, neun oder zehn Stabilisierungsmittel vorgesehen.

Vorzugsweise werden zur Stabilisierung der erfindungsgemäßen Vorrichtung also mehrere Stabilisierungsmittel kombiniert, so dass unterschiedliche Bereiche der Vorrichtung zum Auffangen der auftretenden Belastungen verstärkt werden können.

Um die Stabilität der erfindungsgemäßen Vorrichtung weiter zu erhöhen, ist vorgesehen, dass die äußeren Ränder des oder der Befestigungsmittel(s) derart voneinander beabstandet sind, dass die Strecke zwischen den Rändern mindestens 50 %, vorzugsweise mindestens 60 %, weiter bevorzugt mindestens 70 %, besonders bevorzugt mindestens 75 %, insbesondere bevorzugt mindestens 80 %, der Breite der Basisplatte entspricht. Dadurch, dass sich das oder die Befestigungsmittel erfindungsgemäß in seiner oder ihrer Ausdehnung über mehr als die Hälfte der Breite der Basisplatte erstreckt oder erstrecken, kann die Vorrichtung stabil und sicher an dem Kleidungsstück, beispielsweise einer Hose oder einem Gürtel, befestigt werden. Durch die Breite des Befestigungsmittels und/oder das zweite und optional jedes weitere Befestigungsmittel wird die erfindungsgemäße Vorrichtung derart stabilisiert, dass ein seitliche Abkippen oder Verrutschen der gesamten Vorrichtung selbst beim Halten sehr großer elektronischer Geräte effektiv verhindert wird.

In besonders vorteilhafter Ausgestaltung der Erfindung ist vorgesehen, dass mindestens zwei voneinander beabstandete Befestigungsmittel vorgesehen sind. Vorzugsweise sind die Befestigungsmittel annähernd parallel zueinander angeordnet. Diese Maßnahmen erhöhen jeweils einerseits die Stabilität der Befestigung und erlaubt andererseits das korrekte Ausrichten der erfindungsgemäßen Vorrichtung im am Kleidungsstück befestigten Zustand.

In weiterer besonders vorteilhafter Ausgestaltung der Erfindung ist vorgesehen, dass das Befestigungsmittel und/oder das Halteelement, vorzugsweise flexibel oder federnd, an der Basisplatte befestigt oder einstückig angeformt ist/sind, wobei der Bereich innerhalb dessen das Befestigungsmittel und/oder das Haltelement mit der Basisplatte verbunden ist/sind, mindestens ein Verstärkungsmittel aufweist. Als Verstärkungsmittel kann beispielsweise mindestens eine Vertiefung, insbesondere eine Sicke, im Material und/oder mindestens eine Verdickung des Materials Anwendung finden. Diese Ausgestaltung ermöglicht eine stabile Befestigung der erfindungsgemäßen Vorrichtung an dem Kleidungsstück mittels unter Vorspannung stehender Befestigungsmittel. So können die Befestigungsmittel beispielsweise jeweils als Blattfeder ausgebildet sein, wobei die Bereiche, in denen die Befestigungsmittel an der Basisplatte angeformt oder befestigt sind, zwar einerseits fest genug sind, um eine stabile Befestigung an dem Kleidungsstück zu gewährleisten, aber andererseits auch flexibel genug, um ein eingeschränktes Bewegen der Befestigungsmittel zu ermöglichen, damit das Kleidungsstück bzw. der Gürtel zwischen den Befestigungsmitteln und der Basisplatte eingeklemmt werden kann. Das Haltelement kann ebenfalls flexibel oder federnd an der Basisplatte befestigt oder angeformt sein. So kann das Haltelement beispielsweise als Blattfeder ausgebildet sein, wobei der Bereich, in dem das Haltelement an der Basisplatte angeformt oder befestigt ist, zwar einerseits fest genug ist, um ein sicheres Halten des elektronischen Geräts zu gewährleisten, aber andererseits auch flexibel genug, um ein eingeschränktes Bewegen des Haltelements zu ermöglichen, damit das elektronische Geräte zwischen dem Haltelement und der Basisplatte eingeklemmt werden kann. Das zusätzliche Verstärkungsmittel im dem genannten Bereich sorgt dabei in vorteilhafter Weise dafür, dass das Befestigungsmittel und/oder das Haltelement nicht abbrechen kann/können. Als Verstärkungsmittel kann beispielsweise mindestens eine Vertiefung, insbesondere eine Sicke, im Material und/oder mindestens eine Verdickung des Materials vorgesehen sein.

Vorzugsweise bestehen das Befestigungsmittel und das Halteelement zumindest teilweise aus einem elastischen Material, insbesondere einem elastischen Polymer.

In weiterer vorteilhafter Ausgestaltung der Erfindung ist vorgesehen, dass Basisplatte, Haltelement und Befestigungsmittel zumindest teilweise aus dem gleichen Material bestehen und einstückig miteinander verbunden sind. Bei dem Material handelt es sich vorzugsweise um ein thermoplastisches Polymer, insbesondere ein Polycarbonat-Acrylnitril-Styrol-Acrylester-Blend. Eine derartige Vorrichtung kann in vorteilhafter Weise kostengünstig in einem Einkomponenten-Spritzgießverfahren hergestellt werden.

Vorzugsweise ist ein Teil des Bekleidungsstücks, ein Gürtel oder Ähnliches zwischen dem Befestigungsmittel und der Basisplatte einklemmbar.

In vorteilhafter Ausgestaltung der Erfindung ist ferner vorgesehen, dass das Haltelement derart angeordnet ist, dass das damit gehaltene Gerät ausschließlich nach oben über die Basisplatte hinausragt, so dass die erfindungsgemäße Vorrichtung vom Benutzer mit eingesetztem Gerät selbst dann am Rücken getragen werden kann, wenn er sich hinsetzt. Beim Sitzen braucht das Gerät vorteilhafterweise also nicht aus der Vorrichtung entnommen werden.

Bei bestimmten elektronischen Geräten hat es sich als vorteilhaft erwiesen, wenn die erfindungsgemäße Vorrichtung so dimensioniert bzw. konstruiert ist, dass das Haltelement derart angeordnet ist, dass das damit gehaltene Gerät mit mindestens 50 %, vorzugsweise mindestens 60 %, besonders bevorzugt mindestens 70 %, insbesondere bevorzugt mindestens 80 %, seiner Länge oberhalb des Befestigungsmittels angeordnet ist. Der Vorteil liegt insbesondere darin, dass die Vorrichtung zwar klein, leicht und handlich ist, jedoch dennoch ein stabiles und sicheres Halten des Geräts gewährleistet. Dass das Gerät nach oben aus der Vorrichtung herausragt, ist dabei weder optisch noch unter Stabilitätsgesichtspunkten nachteilig, sondern hat vielmehr den Vorteil, dass die Vorrichtung mit dem Gerät auch beim Sitzen getragen werden kann.

In vorteilhafter Ausgestaltung der Erfindung können drei Haltelemente vorgesehen sein, wobei zwei Halteelemente gegenüberliegend in jeweils einem Randbereich der Basisplatte und das weitere Halteelement in einem freien Randbereich der Basisplatte angeordnet sind. Auf diese Weise wird das elektronische Gerät sicher in der Vorrichtung gehalten, wobei es vorzugsweise zwischen den Halteelementen und der Basisplatte eingeklemmt ist. Alternativ kann aber auch nur ein Haltelement vorgesehen sein, welche in Form einer randseitigen, an drei Seiten der Basisplatte umlaufenden oder U-förmigen Nut ausgebildet sein kann.

In vorteilhafter Ausgestaltung der Erfindung ist ferner vorgesehen, dass das Haltelement an einem freien, vorzugsweise nach oben weisenden Ende von der Basisplatte weggerichtet ist, so dass der Abstand zwischen der Basisplatte und dem Halteelement in diesem Bereich, vorzugsweise trichterförmig, vergrößert ist. Durch diese konstruktive Maßnahme wird das Einführen des elektronischen Geräts in das Halteelement deutlich erleichtert, so dass es ohne Weiteres möglich ist, das Gerät "ohne Hinzusehen" in die Vorrichtung zu stecken, beispielsweise wenn die Vorrichtung am Rücken des Benutzers getragen wird.

In weiterer vorteilhafter Ausgestaltung der Erfindung ist vorgesehen, dass mindestens ein Stützelement vorgesehen ist, das schwenkbar mit der Basisplatte verbunden oder zumindest verbindbar ist. Durch das Stützelement kann die erfindungsgemäße Vorrichtung zusätzlich als Standhalterung verwendet werden, wenn sie nicht am Körper getragen wird. Der Benutzer braucht das elektronische Gerät also nicht aus der Vorrichtung zu nehmen, wenn er es nicht trägt, sondern kann es mit Hilfe der erfindungsgemäßen Vorrichtung, beispielsweise auf einem Tisch, aufstellen und in einer vorteilhaften Position benutzen. Das Stützelement kann entweder fest mit der Vorrichtung, vorzugsweise im Bereich der Basisplatte, verbunden sein, oder aber als separates Teil vorliegen, das an der Vorrichtung befestigt werden kann, beispielsweise mittels einer Klemm-Verbindung.

Die Erfindung umfasst in vorteilhafter Weise auch die Verwendung der erfindungsgemäßen Vorrichtung als Halterung für Tablet-PCs und Laptop-Computer, insbesondere das iPad^{®} der Apple Inc.. Bisher mussten Tablet-PCs oder Laptops immer in hierfür vorgesehenen Taschen transportiert werden, da die bekannten tragbaren Halterungen für Mobiltelefone hierfür nicht geeignet waren. Mit Hilfe der erfindungsgemäßen Vorrichtung ist es erstmals möglich, diese größeren elektronischen Geräte an einem Kleidungsstück zu befestigen und direkt am Körper zu tragen. Überraschender Weise ist dies ohne Probleme möglich, wobei die erfindungsgemäße Vorrichtung gewährleistet, dass die Geräte trotz ihrer Dimensionen nicht stören oder die Bewegungsfreiheit einschränken. Insbesondere, wenn die erfindungsgemäße Vorrichtung am Rücken des Benutzers getragen wird, ergibt sich eine sehr komfortable Tragweise für das elektronische Gerät, wobei das Gerät zusammen mit der Vorrichtung sogar den Rücken stabilisiert. Darüber hinaus ist das Gerät bei dieser Tragweise von vorne nicht sichtbar, was in bestimmten Situationen für den Benutzer ebenfalls von Vorteil sein kann.

In vorteilhafter Ausgestaltung der Erfindung kann die Vorrichtung derart dimensioniert bzw. ausgestaltet sein, dass das elektronische Gerät auch in der Vorrichtung gehalten werden kann, wenn es sich in einer Schutzhülle, einer Tasche oder Ähnlichem befindet oder mit einem Schutzdeckel versehen ist.

"Kleine elektronische Geräte" im Sinne der Erfindung sind beispielsweise Mobiltelefone, Pager, mobile Navigationsgeräte und Ähnliches mit äußeren Abmessungen von maximal 150 mm Höhe und 100 mm Breite.

"Große elektronische Geräte" oder "größere elektronische Geräte" im Sinne der Erfindung sind beispielsweise Laptop-Computer, Tablet-PCs, elektronische Bücher und Ähnliches mit äußeren Abmessungen von mehr als 150 mm Höhe und 100 mm Breite.

"Sicken" im Sinne der Erfindung sind manuell oder maschinell hergestellte rinnenförmige Vertiefungen im Material der erfindungsgemäßen Vorrichtung, insbesondere in der Basisplatte, die zur Erhöhung der Steifigkeit der erfindungsgemäßen Vorrichtung dienen.

Das zur Herstellung der erfindungsgemäßen Vorrichtung verwendete Material umfasst vorzugsweise die folgenden mechanischen Eigenschaften:
Zug-Modul: 2.200 bis 2.600 MPa, vorzugsweise ca. 2.400 MPa (ISO 527-1/-2);
Streckspannung: 45 bis 65 MPa, vorzugsweise ca. 55 MPa (ISO 527-1/-2);
Streckdehnung: 4 bis 5 %, vorzugsweise ca. 4.5 % (ISO 527-1/-2);
Nominelle Bruchdehnung: 35 bis 45 %, vorzugsweise ca. 39 % (ISO 527-1/-2); Charpy-Kerbschlagzähigkeit (+23°C): 30 bis 40 kJ/m², vorzugsweise ca. 35 kJ/m² (ISO 179/1eA); und/oder
Dichte: 1.100 bis 1.200 kg/m3, vorzugsweise ca. 1.150 kg/m³ (ISO 1183).

Das zur Herstellung der erfindungsgemäßen Vorrichtung verwendete Material umfasst vorzugsweise die folgenden thermischen Eigenschaften:
Glasübergangstemperatur (10°C/min): 130 bis 150°C, vorzugsweise ca. 141°C (ISO 11357-1/-2);
Formbeständigkeitstemperatur (1.80 MPa): 90 bis 105°C, vorzugsweise ca.97°C (ISO 75-1/-2);
Formbeständigkeitstemperatur (0.45 MPa): 120 bis 140°C, vorzugsweise ca. 130 °C (ISO 75-1/-2); und/oder
Vicat-Erweichungstemperatur (50°C/h 50N): 100 bis 120°C, vorzugsweise ca. 110 °C (ISO 306).

Die erfindungsgemäße Vorrichtung wird vorzugsweise in einem Einkomponenten-Spritzgießverfahren hergestellt, welchen die folgenden Parameter umfasst:
Massetemperatur: 230 bis 270°C, vorzugsweise ca. 250°C (ISO 294);
Werkzeugtemperatur: 50 bis 70°C, vorzugsweise ca. 60°C (ISO 10724);
Spritzgeschwindigkeit: 230 bis 270 mm/s, vorzugsweise 250 mm/s (ISO 294); und/oder
Nachdruck: 80 bis 120 MPa, vorzugsweise ca. 100 MPa (ISO 294).

Die Erfindung wird im Weiteren anhand der folgenden Abbildungen beispielhaft näher erläutert.

**Figur 1** zeigt perspektivische Ansichten der Vorderseite (a) und der Rückseite (b) einer Ausführungsform der erfindungsgemäßen Vorrichtung.

**Figur 2** zeigt eine Seitenansicht der Vorrichtung gemäß Figur 1.

**Figur 3** zeigt perspektivische Ansichten der Vorderseite (a) und der Rückseite (b) einer zweiten Ausführungsform der erfindungsgemäßen Vorrichtung.

**Figur 4** zeigt eine perspektivische Ansicht der erfindungsgemäßen Vorrichtung gemäß Figur 1 mit eingesetztem elektronischem Gerät.

**Figur 5** zeigt jeweils eine Draufsicht der Vorderseite (a) und der Rückseite (b) einer weiteren Ausführungsform der erfindungsgemäßen Vorrichtung.

**Figur 6** zeigt perspektivische Ansichten (a, b) und eine Seitenansicht (c) einer besonders vorteilhaften Ausführungsform der erfindungsgemäßen Vorrichtung mit Stützelement. Das Stützelement ist hier in Transportstellung (a) sowie in ausgeklapptem Zustand (b, c) dargestellt.

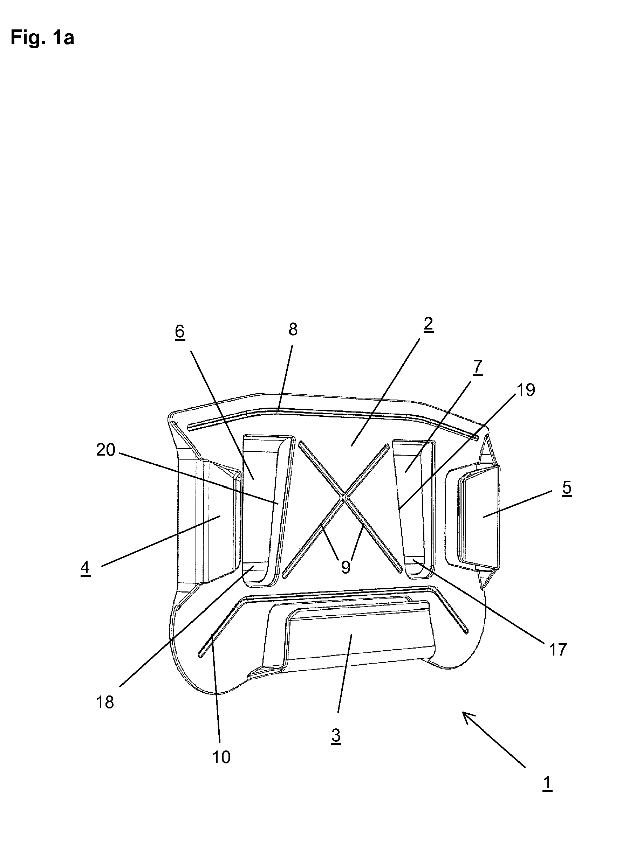

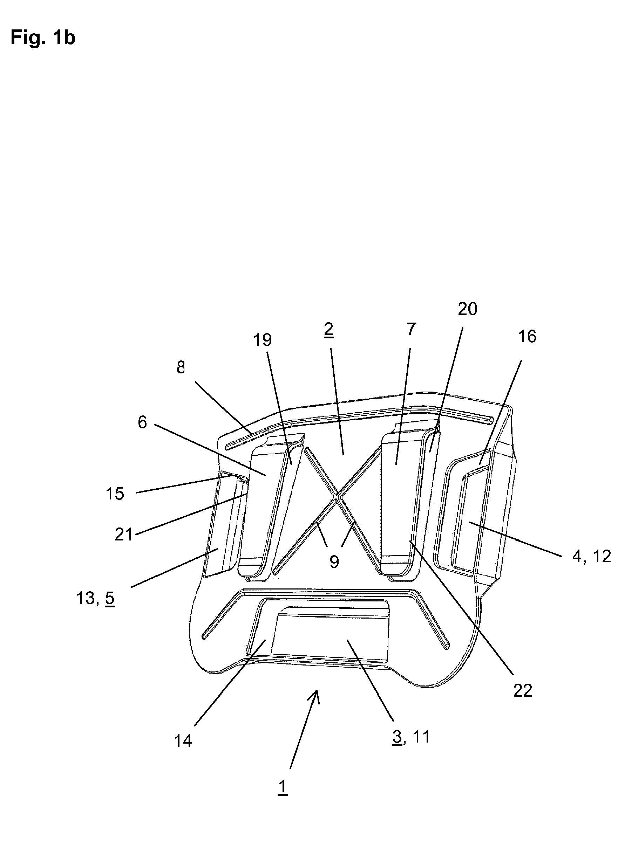

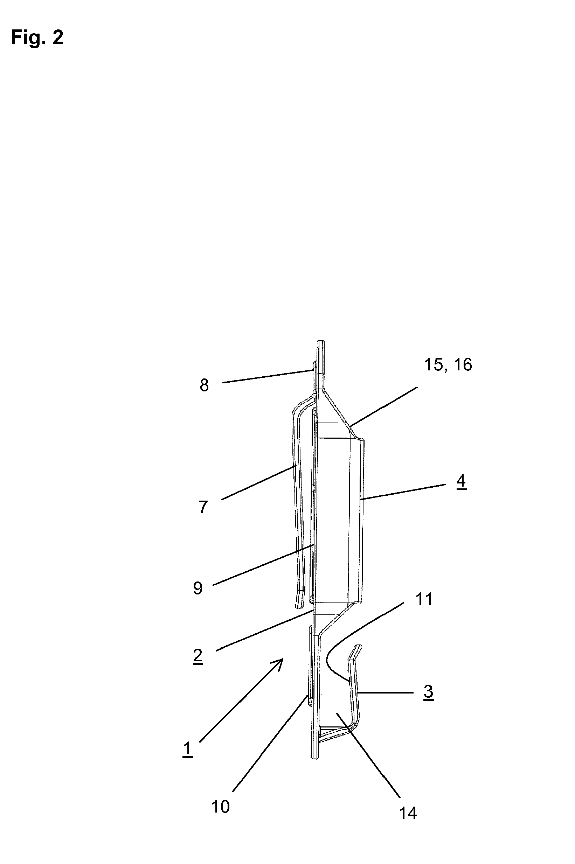

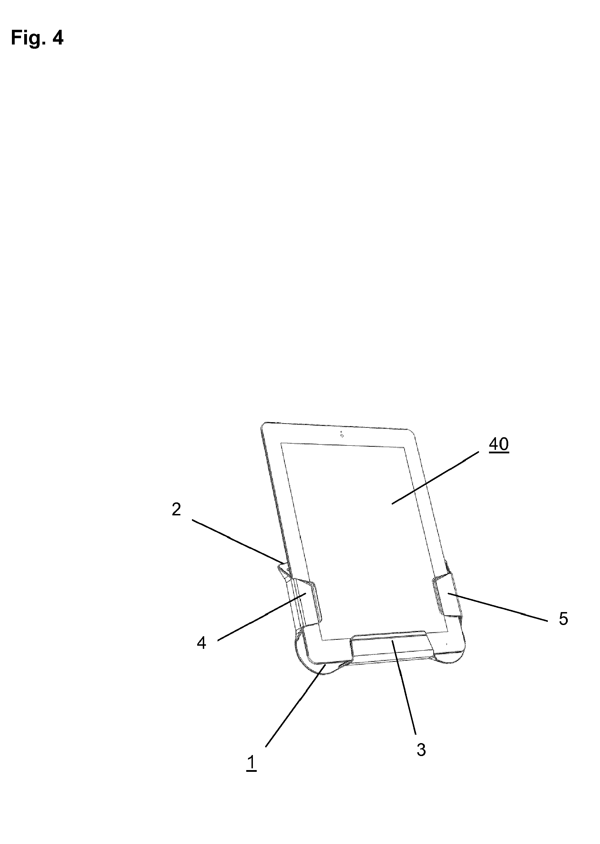

Figur 1 zeigt jeweils eine perspektivische Ansicht der Vorderseite und der Rückseite einer ersten Ausführungsform der erfindungsgemäßen Vorrichtung. Figur 2 zeigt eine Seitenansicht der Vorrichtung 1 gemäß Figur 1. Die Vorrichtung 1 besteht aus einer flachen, im Wesentlichen ebenen Basisplatte 2, die der Vorrichtung 1 die nötige Stabilität verleiht. Zum Halten des elektronischen Geräts sind bei dieser Ausführungsform drei Halteelemente 3, 4, 5 vorgesehen, die jeweils einstückig mit der Basisplatte 2 verbunden sind. Das im unteren Bereich der Basisplatte 2 angeordnete Halteelement 3 trägt dabei im Wesentlichen das zu transportierende Gerät, während die beiden seitlichen Halteelemente 4, 5 ein seitliches Abkippen des Geräts verhindern. In alternativer Ausgestaltung der Erfindung könnten diese Funktionen auch durch ein einzelnes, u-förmig ausgebildetes Halteelement sichergestellt werden. Die Halteelemente 3, 4, 5 sind elastisch mit der Basisplatte 2 verbunden und sind praktisch als eine Art Federelemente ausgebildet, die mit ihren der Basisplatte 2 zugewandten Innenseiten 11, 12, 13 mit leichtem Druck gegen das zu haltende Gerät drücken, so dass dieses zwischen den Halteelementen 3, 4, 5 und der Basisplatte 2 eingeklemmt wird. Das zu haltende Gerät wird bei dieser Ausführungsform von oben in die jeweils zwischen den Halteelementen 3, 4, 5 und der Basisplatte 2 liegenden Zwischenräume 14, 15, 16 eingeführt und mittels der Federkraft der Halteelemente 3, 4, 5 in der Vorrichtung 1 gehalten. Eine erfindungsgemäße Vorrichtung mit eingesetztem elektronischen Gerät ist in Figur 4 näher dargestellt.

Die erfindungsgemäße Vorrichtung 1 weist auf der in Bezug auf die Halteelemente 3, 4, 5 gegenüberliegenden Seite der Basisplatte 2 zwei längliche, parallel zueinander angeordnete Befestigungsmittel 6, 7 auf, die der Befestigung der Vorrichtung 1 an einem Teil eines Kleidungsstücks, einem Gürtel oder ähnlichem dienen. Die Befestigungsmittel 6, 7 sind ebenfalls einstückig und elastisch mit der Basisplatte 2 verbunden, so dass auch die Befestigungsmittel 6, 7 praktisch als eine Art Federelemente ausgebildet sind. Die Befestigungsmittel 6, 7 liegen jeweils mit ihren der Basisplatte 2 zugewandten Innenflächen 17, 18 an dem Kleidungsstück bzw. Gürtel an und klemmen dieses bzw. diesen im Bereich der zwischen den Befestigungsmitteln 6, 7 und der Basisplatte 2 liegenden Zwischenräume 19, 20 ein. Die Befestigung der Vorrichtung 1 an dem Kleidungsstück bzw. Gürtel ist bei der vorliegenden Ausführungsform deshalb besonders stabil, weil die Befestigungsmittel 6, 7 derart angeordnet sind, dass die Strecke zwischen den äußeren Rändern 21, 22 der Befestigungsmittel 6, 7 ungefähr 65 % der Breite der Basisplatte 2 entspricht. Dadurch, dass die Ausdehnung der Befestigungsmittel 6, 7 in Bezug auf die Basisplatte 2 deutlich größer als 50 % ist, was eine Ausdehnung der Befestigung über mehr als die Hälfte der Breite der Basisplatte 2 bedeutet, wird ein seitliches Abkippen der Vorrichtung 1 im befestigten Zustand verhindert und somit eine sehr stabile Befestigung an dem Kleidungsstück bzw. Gürtel gewährleistet. In alternativer Ausführungsform der Erfindung könnten die Befestigungsmittel 6, 7 auch als ein einzelnes durchgehendes Befestigungsmittel ausgebildet sein, welches dann eine Breite aufweisen müsste, die mehr als 50 % der Breite der Basisplatte 2 entspricht, vorzugsweise eine Breite die 60 - 70 % der Breite der Basisplatte 2 einnimmt.

Da die erfindungsgemäße Vorrichtung 1 zum Halten und Transportieren größerer elektronischer Geräte, wie beispielsweise Tablet-PCs oder Laptop-Computern, vorgesehen ist, sind aufgrund der sich daraus ergebenden Dimensionen hohe Anforderungen an die Stabilität der Vorrichtung 1 und insbesondere der Basisplatte 2 zu stellen. Bei ersten Versuchen mit Prototypen hat sich überraschenderweise herausgestellt, dass beim Tragen der elektronischen Geräte am Körper relativ hohe Kräfte auf die Vorrichtung 1 wirken, die bereits nach relativ kurzer Zeit zu Brüchen und Rissen im Material führen können. Um ein Brechen der Vorrichtung 1 während der Benutzung zu verhindern und eine lange Lebensdauer zu gewährleisten, weist die Basisplatte 2 erfindungsgemäß Stabilisierungsmittel 8, 9, 10 auf, die der Vorrichtung 1 die nötige Widerstandsfähigkeit in Bezug auf die auftretenden Kräfte verleihen. Im vorliegenden Ausführungsbeispiel sind die Stabilisierungsmittel 8, 9, 10 in Form von Sicken ausgebildet, d.h. rinnen- oder nutförmigen Vertiefungen im Material, die die Basisplatte 2 verstärken und somit die Steifigkeit der Vorrichtung 1 deutlich erhöhen. Im hier dargestellten Ausführungsbeispiel sind drei Stabilisierungsmittel 8, 9, 10 vorgesehen, wobei ein Stabilisierungsmittel 7 im oberen Bereich der Basisplatte 2, ein weiteres Stabilisierungsmittel 10 im unteren Bereich der Basisplatte 2 und das dritte Stabilisierungsmittel 9 im dazwischenliegenden, mittleren Bereich der Basisplatte 2 angeordnet sind. Je nach Form und Anwendungsbereich der Vorrichtung kann auch ein einzelnes Stabilisierungsmittel ausreichend sein, sofern dieses entsprechend dimensioniert bzw. angeordnet ist. Es kommt also bei der vorliegenden Erfindung weder auf die Anzahl noch auf die Form des Stabilisierungsmittels bzw. der Stabilisierungsmittel an, sondern lediglich darauf, dass der erfindungsgemäßen Vorrichtung die erforderliche Steifigkeit verliehen wird. Anstelle der im vorliegenden Ausführungsbeispiel eingesetzten Sicken könnten beispielsweise auch in das Material der Basisplatte 2 eingelegte Drähte für die erforderliche Stabilität der Vorrichtung 1 sorgen. Darüber hinaus können auch die Halteelemente 3, 4, 5 und/oder die Befestigungsmittel 6, 7 selbst und/oder die Bereiche, in denen diese mit der Basisplatte 2 verbunden sind, Stabilisierungsmittel aufweisen. Bei diesen Stabilisierungsmitteln kann es sich beispielsweise auch um Sicken, Verdickungen des Materials oder eingelegte Verstärkungselemente handeln.

Aus Figur 2 wird deutlich, dass die Vorrichtung 1 insgesamt relativ flach ausgebildet ist und somit durch den Benutzer komfortabel am Körper getragen werden kann, ohne ihn zu behindern oder in seiner Bewegungsfreiheit einzuschränken. Figur 2 zeigt auch deutlich, dass der Zwischenraum 14, der durch den unteren Bereich der Basisplatte 2 und das Halteelement 3 gebildet wird, eine Art Tasche bildet, in der das zu transportierende Gerät sicher gehalten wird. Die seitlich angeordneten Halteelemente, von denen hier nur das Halteelement 4 sichtbar ist, dienen als seitliche Führungs- und Positionierungshilfe beim Einschieben des elektronischen Geräts in die Vorrichtung 1.

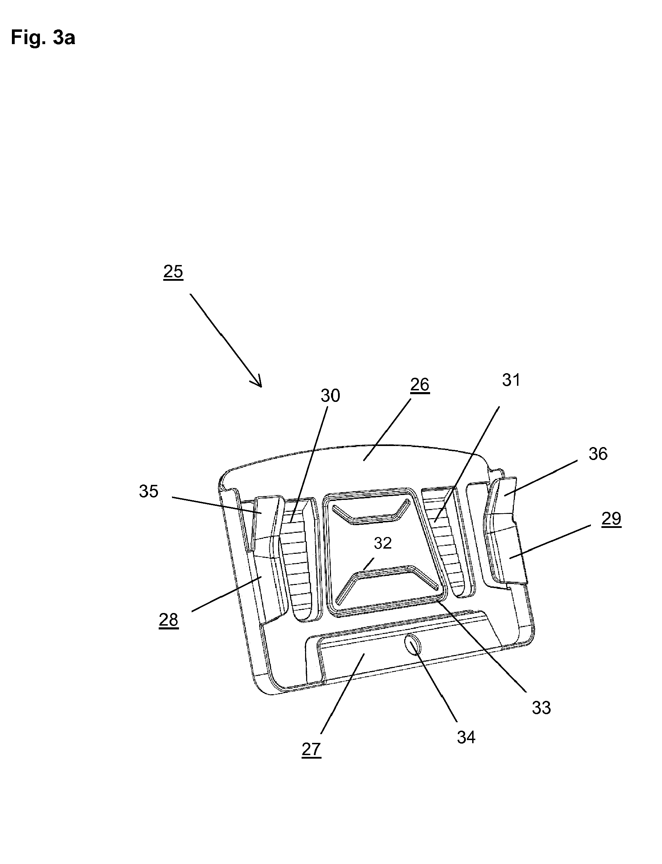

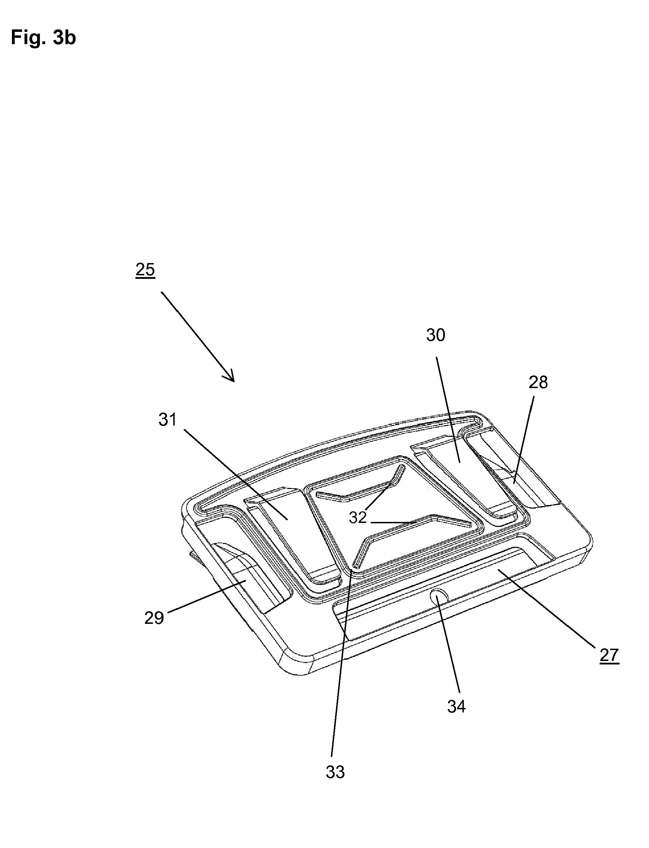

Figur 3 zeigt jeweils eine perspektivische Ansicht der Vorderseite und der Rückseite einer zweiten Ausführungsform der erfindungsgemäßen Vorrichtung. Wie die Vorrichtung 1 gemäß Figur 1 umfasst auch die Vorrichtung 25 eine Basisplatte 26, drei Halteelemente 27, 28, 29 und zwei Befestigungsmittel 30, 31. Zur Erhöhung der Steifigkeit der Vorrichtung 25 ist die Basisplatte 26 mit Stabilisierungsmitteln 32, 33 in Form von Sicken versehen. Im hier dargestellten Ausführungsbeispiel weist das Halteelement 27 eine zentriert angeordnete Ausnehmung 34 auf, die beispielsweise der Bedienung des in der Vorrichtung 25 gehaltenen elektronischen Geräts dienen kann. So kann der Benutzer beispielsweise durch die Ausnehmung 34 hindurch auf Bedienelemente des elektronischen Geräts zugreifen, so dass er das Gerät nicht aus der erfindungsgemäßen Vorrichtung 25 herausnehmen muss, um es zu bedienen. Bei den Halteelementen 28, 29 ist jeweils das freie, nach oben weisende Ende 35, 36 derart ausgebildet, dass es von der Basisplatte 26 weggerichtet ist. Durch diese Maßnahme vergrößert sich im Bereich der Enden 35, 36 der Abstand zwischen den Halteelementen 28, 29 und der Basisplatte 26 nach oben trichterförmig, was ein Einführen des elektronischen Geräts in die Vorrichtung 25 deutlich erleichtert. Dies hat den Vorteil, dass der Benutzer das elektronische Gerät beispielsweise auch dann in die Vorrichtung 25 einsetzen kann, wenn er die Vorrichtung 25 auf dem Rücken trägt.

Figur 4 zeigt eine perspektivische Ansicht der erfindungsgemäßen Vorrichtung 1 gemäß Figur 1 mit eingesetztem elektronischen Gerät 40. Es wird in dieser Darstellung deutlich, dass das elektronische Gerät 40 nach unten durch das Halteelement 3 und seitlich durch die Halteelemente 4, 5 in der erfindungsgemäßen Vorrichtung 1 gehalten wird. Dabei wird das elektronische Gerät 40 zwischen den Halteelementen 3, 4, 5 und der Basisplatte 2 eingeklemmt, so dass es sicher in der Vorrichtung 1 befestigt ist. Aus dieser Darstellung wird ebenfalls deutlich, dass die Vorrichtung 1 so ausgebildet und das Halteelement 3 derart angeordnet ist, dass das elektronische Gerät 40 mit ungefähr 60 % seiner Länge oberhalb der hier verdeckten Befestigungsmittel angeordnet ist und mit ungefähr 55 % seiner Länge nach oben aus der Vorrichtung 1 herausragt. Überraschenderweise gewährleistet die erfindungsgemäße Vorrichtung 1 trotz ihrer kleinen und handlichen Form dabei ein stabiles und sicheres Tragen des elektronischen Geräts 40 durch den Benutzer.

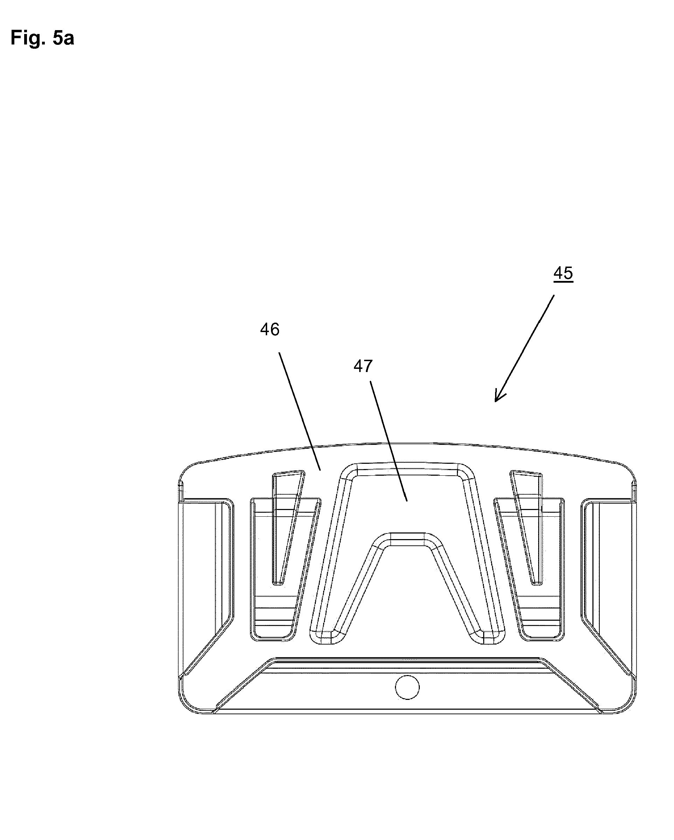

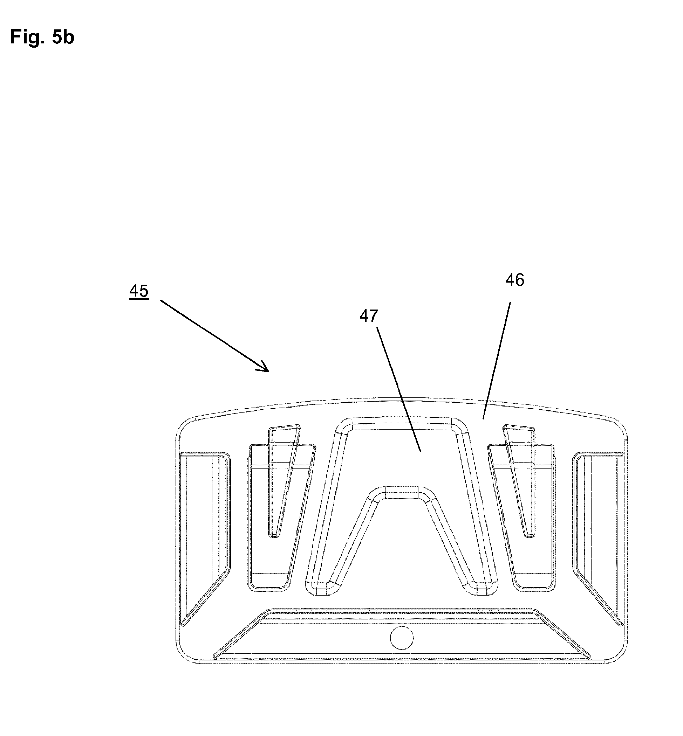

Figur 5 zeigt jeweils eine Draufsicht auf die Vorderseite und die Rückseite einer weiteren Ausführungsform der erfindungsgemäßen Vorrichtung. Im Unterschied zu den erfindungsgemäßen Vorrichtungen 1 und 25 gemäß der Figuren 1 und 3 weist die erfindungsgemäße Vorrichtung 45 im Bereich ihrer Basisplatte 46 ein einzelnes Stabilisierungsmittel 47 auf. Das Stabilisierungsmittel 47 besteht aus einem mehr oder weniger hufeisenförmigen Bereich, der durch eine umlaufende Vertiefung bzw. Rinne begrenzt wird und in Bezug auf die Basisplatte 46 leicht versetzt angeordnet ist, d.h. sich in einer anderen, von der Vorderseite aus gesehen tieferen Ebene als die Basisplatte 46 befindet. Es nämlich überraschender Weise herausgestellt, dass auch ein einzelnes Stabilisierungsmittel die erfindungsgemäße Vorrichtung derart versteifen kann, dass diese den auftretenden Kräften standhält.

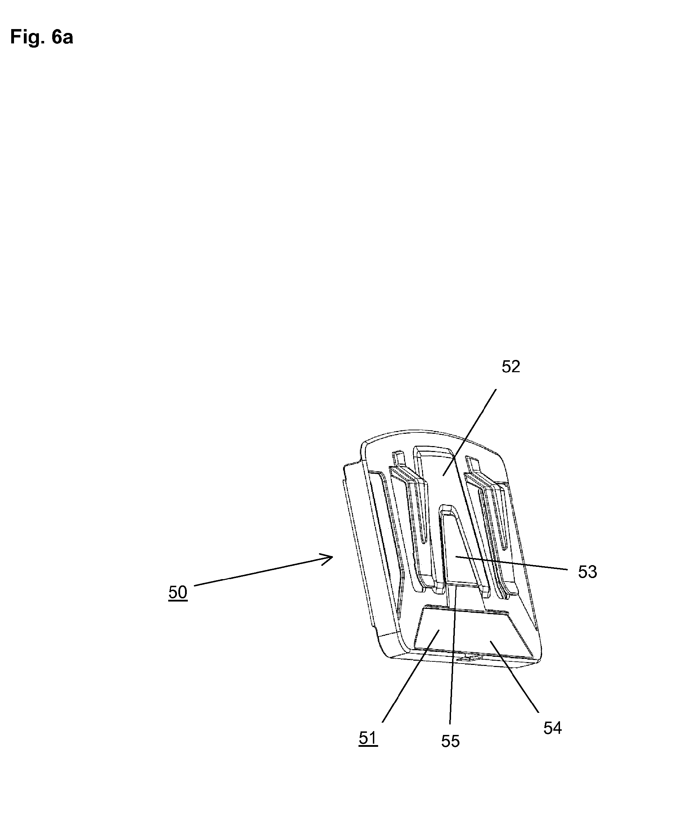

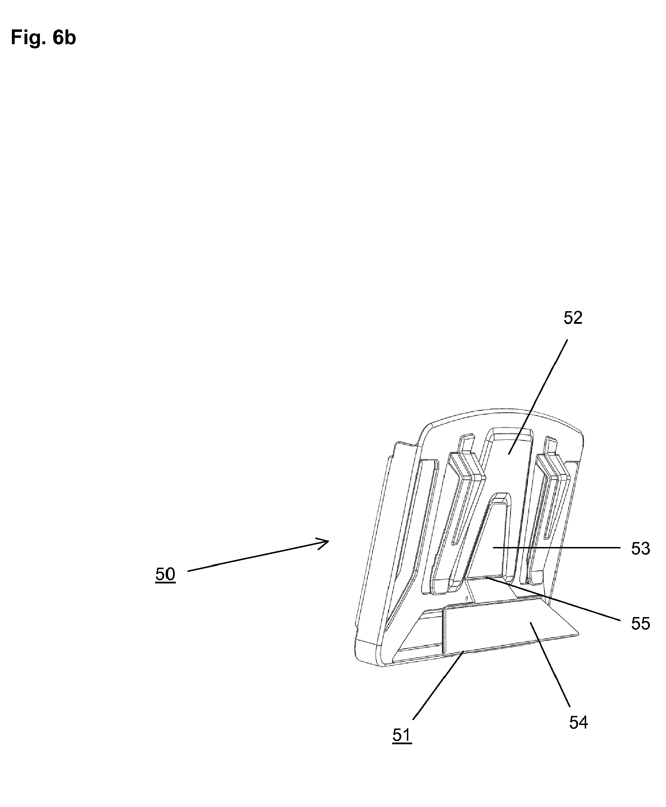

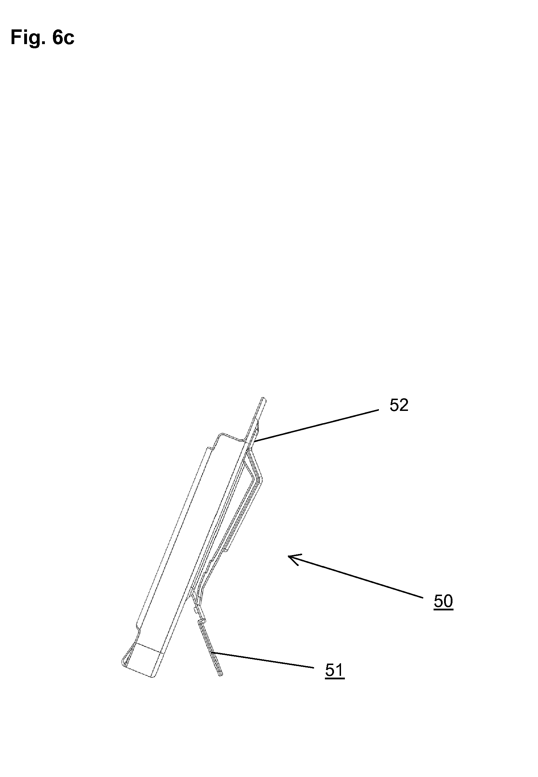

Figur 6 zeigt perspektivische Ansichten und eine Seitenansicht einer besonders vorteilhaften Ausführungsform einer erfindungsgemäßen Vorrichtung 50, welche zusätzlich mit einem Stützelement 51 ausgestattet ist. Das Stützelement 51 ist mit der Basisplatte 52 der Vorrichtung 50 schwenkbar verbunden und kann derart ausgeklappt werden, dass es als Standfuß fungiert, der ein Aufstellen der Vorrichtung 50 auf einer mehr oder weniger ebenen Oberfläche, beispielsweise einem Tisch, ermöglicht. Das Stützelement 51 ist in seinem oberen Bereich 53 fest oder lösbar mit der Basisplatte 52 verbunden, beispielsweise verklebt oder mittels einer Klemm-Verbindung befestigt. Der Unterbereich 54 des Stützelements 51 kann um die Längsachse des zwischen dem oberen Bereich 53 und dem unteren Bereich 54 angeordneten Gelenks 55 von der Basisplatte 52 weggerichtet ausgeklappt werden, so dass der untere Bereich 54 des Stützelements 51 als Standfuß genutzt werden kann. Das elektronische Gerät kann also auch dann in der Vorrichtung 50 verbleiben, wenn der Benutzer es nicht am Körper trägt und transportiert. Durch das Stützelement 51 kann die erfindungsgemäße Vorrichtung 50 nicht nur zum Tragen des elektronischen Geräts, sondern auch zur weiteren Nutzung desselben eingesetzt werden. Wie bereits aus Figur 4 ersichtlich bleibt das elektronische Gerät dabei von vorne bedienbar, so dass es bei der Benutzung nicht aus der Vorrichtung 50 entnommen werden muss. Das Stützelement 51 stellt also eine sehr nützliche Zusatzfunktion der erfindungsgemäßen Vorrichtung 50 zur Verfügung und trägt zusätzlich zur vielseitigen Nutzung der erfindungsgemäßen Vorrichtung bei. Das Stützelement kann entweder dauerhaft mit der erfindungsgemäßen Vorrichtung verbunden sein oder als separates Teil vorliegen, das nur bei Bedarf an der Vorrichtung befestigt wird.

## Patentansprüche

1. Vorrichtung (1, 25, 45, 50) zur Befestigung eines elektronischen Geräts (40) an einem Kleidungsstück, insbesondere zur Verwendung als Halterung für Tablet-PCs und Laptop-Computer, welche eine Basisplatte (2, 26, 46, 52), mindestens ein auf einer Seite der Basisplatte (2, 26, 46, 52) von dieser beabstandetes Halteelement (3, 4, 5, 27, 28, 29) zum Halten des Geräts (40) und mindestens ein auf der gegenüberliegenden Seite der Basisplatte (2, 26, 46, 52) angeordnetes Befestigungsmittel (6, 7, 28, 29) zur Befestigung an dem Kleidungsstück umfasst, **dadurch gekennzeichnet, dass** die Basisplatte (2, 26, 46, 52) mindestens ein Stabilisierungsmittel (8, 9, 10, 32, 33, 47) aufweist.

2. Vorrichtung nach Anspruch 1, **dadurch gekennzeichnet, dass** das Stabilisierungsmittel (8, 9, 10, 32, 33, 47) mindestens eine Vertiefung in der Basisplatte (2, 26, 46, 52) und/oder mindestens eine Verdickung der Basisplatte (2, 26, 46, 52) umfasst.

3. Vorrichtung nach Anspruch 1 oder 2, **dadurch gekennzeichnet, dass** die äußeren Ränder (21, 22) des oder der Befestigungsmittel(s) (6, 7, 28, 29) derart voneinander beabstandet sind, dass die Strecke zwischen den Rändern (21, 22) mindestens 50 %, vorzugsweise mindestens 60 %, weiter bevorzugt mindestens 70 %, besonders bevorzugt mindestens 75 %, insbesondere bevorzugt mindestens 80 %, der Breite der Basisplatte (2, 26, 46, 52) entspricht.

4. Vorrichtung nach Anspruch 1, 2 oder 3, **dadurch gekennzeichnet, dass** mindestens zwei voneinander beabstandete, vorzugsweise annähernd parallel zueinander angeordnete Befestigungsmittel (6, 7, 28, 29) vorgesehen sind.

5. Vorrichtung nach einem der Ansprüche 1 bis 4, **dadurch gekennzeichnet, dass** das Befestigungsmittel (6, 7, 28, 29) und/oder das Halteelement (3, 4, 5, 27, 28, 29), vorzugsweise flexibel oder federnd, an der Basisplatte (2, 26, 46, 52) befestigt oder einstückig angeformt ist/sind, wobei der Bereich innerhalb dessen das Befestigungsmittel (6, 7, 28, 29) und/oder das Haltelement (3, 4, 5, 27, 28, 29) mit der Basisplatte (2, 26, 46, 52) verbunden ist/sind, mindestens ein Verstärkungsmittel aufweist.

6. Vorrichtung nach einem der Ansprüche 1 bis 5, **dadurch gekennzeichnet, dass** Basisplatte (2, 26, 46, 52), Haltelement (3, 4, 5, 27, 28, 29) und Befestigungsmittel (6, 7, 28, 29) zumindest teilweise aus dem gleichen Material bestehen, vorzugsweise einem thermoplastischen Polymer, insbesondere einem Polycarbonat-Acrylnitril-Styrol-Acrylester-Blend, und einstückig miteinander verbunden sind.

7. Vorrichtung nach einem der Ansprüche 1 bis 6, **dadurch gekennzeichnet, dass** ein Teil des Bekleidungsstücks, ein Gürtel oder Ähnliches zwischen dem Befestigungsmittel (6, 7, 28, 29) und der Basisplatte (2, 26, 46, 52) einklemmbar ist.

8. Vorrichtung nach einem der Ansprüche 1 bis 7, **dadurch gekennzeichnet, dass** das Haltelement (3, 4, 5, 27, 28, 29) derart angeordnet ist, dass das damit gehaltene Gerät (40) ausschließlich nach oben über die Basisplatte (2, 26, 46, 52) hinausragt.

9. Vorrichtung nach einem der Ansprüche 1 bis 8, **dadurch gekennzeichnet, dass** das Haltelement (28, 29) an einem freien, vorzugsweise nach oben weisenden Ende (35, 36) von der Basisplatte (26) weggerichtet ist, so dass der Abstand zwischen der Basisplatte (26) und dem Halteelement (28, 29) in diesem Bereich, vorzugsweise trichterförmig, vergrößert ist.

10. Vorrichtung nach einem der Ansprüche 1 bis 8, **dadurch gekennzeichnet, dass** mindestens ein Stützelement (51) vorgesehen ist, das schwenkbar mit der Basisplatte (52) verbunden oder zumindest verbindbar ist.
